# EUROPEAN PATENT SPECIFICATION

(11) **EP 3 442 338 B1**
(45) Date of publication and mention of the grant of the patent: **08.12.2021**
(21) Application number: 17783025.4
(22) Date of filing: 12.04.2017
(51) Int. Cl.: A01N 55/08, A23B 7/14

(54) **LARGE-SCALE METHODS OF UNIFORMLY COATING PACKAGING SURFACES WITH A VOLATILE ANTIMICROBIAL TO PRESERVE FOOD FRESHNESS**
VERFAHREN ZUR GROSSFLÄCHIGEN GLEICHMÄSSIGEN BESCHICHTUNG VON VERPACKUNGSOBERFLÄCHEN MIT EINER FLÜCHTIGEN ANTIMIKROBIELLEN SUBSTANZ ZUM KONSERVIEREN DER LEBENSMITTELFRISCHE
PROCÉDÉS À GRANDE ÉCHELLE DE REVÊTEMENT UNIFORME DE SURFACES D'EMBALLAGE AVEC UN ANTIMICROBIEN VOLATIL POUR CONSERVER LA FRAÎCHEUR DES ALIMENTS

(30) Priority: 15.04.2016 US 201662323247 P
(43) Date of publication of application: 20.02.2019
(73) Proprietor: AgroFresh Inc., Philadelphia, PA 19106 (US)
(72) Inventor: MALEFYT, Timothy, Stroudsburg, Pennsylvania 18360 (US); MACLEAN, Daniel, Philadelphia, Pennsylvania 19106 (US)
(74) Representative: HGF
(86) International application number: PCT/US2017/027127
(87) International publication number: WO 2017/180695

(56) References cited:
- US-A1- 2009 148 623
- US-A1- 2014 349 853
- US-A1- 2015 223 466
- US-B2- 7 078 546
- US-B2- 8 110 259
- EDWARDS: 'Organoboron reagents and recent strategies in rhodium catalysed additions' PHD THESIS 2011, pages 1 - 293, XP055433374

## Description

### FIELD OF THE PRESENT APPLICATION

The present application relates to large-scale methods of uniformly coating packaging surfaces with a benzoxaborole compound.

### BACKGROUND

Benzoxaborole is a drug known to be effective in treating eukaryotic fungal and parasitic infections. For example, benzoxaborole is used to treat fungal conditions affecting the toenails and fingernails of humans, such as Onychomycosis. Benzoxaborole is also known to be an effective treatment of Human African Trypanosomiasis, commonly called African Sleeping Sickness, which is caused by *T. brucei* parasites that infect thousands of people annually in sub-Saharan Africa.
Benzoxaborole has also been shown to have antimicrobial effects in plants.

For example, benzoxaborole compounds have been proven to be effective as a volatile plant fungicide. However, coating packaging surfaces with a volatile biological control agent, such as a benzoxaborole compound, to provide antimicrobial protection to food, such as crops and meats, and to preserve food freshness has not been reported.

The present disclosure describes large-scale methods of applying volatile antimicrobial compounds on food containers and packaging materials to inhibit microorganisms responsible for decay. More specifically, the present disclosure provides methods of coating benzoxaboroles on the surface of food containers and packaging materials in mass in order to provide antimicrobial protection to food. In addition, the present disclosure describes methods to treat food products against microorganisms that are detrimental to the preservation of the freshness of food, such as plant, crops, or meats.

US 2015/223466 A1 relates to use of a volatile antimicrobial compound against pathogens affecting humans comprising contacting infected areas with an atmosphere containing an effective amount of a volatile antimicrobial compound in gaseous form. US 2014/349853 A1 relates to use of a volatile antimicrobial compound against pathogens affecting meats, plants, or plant parts.

### SUMMARY OF THE INVENTION

The present disclosure provides a method of treating a food product with an antimicrobial agent, the method comprising: administering a benzoxaborole treatment to one or more surfaces of a food packaging material, wherein the benzoxaborole treatment comprises one or more benzoxaborole compounds; drying the one or more surfaces of the food packaging material; placing a food product inside of the food packaging material, and vaporizing the benzoxaborole compound from the one or more surfaces of the food packaging material to treat the food product located therein; wherein the benzoxazole treatment is administered to the food packaging material prior to placing the food product inside the food packaging material; and wherein the benzoxaborole treatment is in liquid form..

In the method described herein, the food product may be a plant crop or a meat, wherein the crop may be a fruit selected from the group consisting of a strawberry, a raspberry, a blackberry, or a blueberry. In addition, the benzoxaborole compound of the present method may be selected from the group consisting of Compound A, Compound B, and/or Compound C. The chamber of the method may be a clamshell, and the clamshell may comprise polyethylene terephthalate. Finally, the benzoxaborole compound of the present method may be administered to the chamber by drenching, spraying and painting.

The present disclosure is also directed to
A large-scale method of treating a plurality of chambers with an antimicrobial agent, the method comprising: placing a plurality of chambers in a position to be treated wherein each of the chambers comprise one or more surfaces; administering the benzoxaborole treatment to one or more surfaces of the plurality of chambers during preformation, formation, or postformation of the plurality of chambers, wherein the benzoxaborole treatment comprises one or more benzoxaborole compounds; drying the one or more surfaces of the plurality of chambers, and affixing the benzoxaborole compound to the one or more surfaces of the plurality of chambers; and wherein the benzoxaborole treatment is in liquid form.

The benzoxaborole compound of the present large-scale method may be selected from the group consisting of Compound A, Compound B, and/or Compound C, and may be administered to the plurality of chambers by drenching, spraying and painting. The benzoxaborole compound may also be administered
to the plurality of chambers during preformation, formation, or postformation of the plurality of chambers. The surfaces of the plurality of chambers of the large-scale method may further comprise a liquid-absorbing material. The plurality of chambers of the large-scale method may comprise a plurality of clamshells, and the plurality of clamshells may comprise polyethylene terephthalate.

### DETAILED DESCRIPTION

The terms "chamber," "container," "material," or the phrase "packaging material" are interchangeable and refer to any material that is used to box, wrap, store, or package a food or food product, such as a plant, crop, or meat. A plurality of chambers comprises from about 1000 to tens of thousands to one or more millions of chambers.

The term "carrier" refers to a material, composition, or control, such as a liquid or solid filler, diluent, excipient, solvent, gas, or encapsulating material, involved in carrying or transporting an active ingredient, compound, analog, or derivative from one location to another location. A carrier must be acceptable in the sense of being compatible with the other ingredients of the formulation and not injurious to food, such as plant, crops, or meat products.

Exemplary embodiments of the compounds of the present disclosure comprise Compounds A, B, and/or C, which may encompass diastereomers and enantiomers of the illustrative compounds. Enantiomers are defined as one of a pair of molecular entities which are mirror images of each other and non-superimposable. Diastereomers or diastereoisomers are defined as stereoisomers other than enantiomers. Diastereomers or diastereoisomers are stereoisomers not related as mirror images. Diastereoisomers are characterized by differences in physical properties.

The terms "food" or "food product" refer to a plant or plant parts.

The term "plant(s)" and "plant parts" include, but not limited to, plant tissues, such as leaves, calli, stems, roots, flowers, fruits, vegetables, pollen, and seeds. A class of plants that may be used in the present invention is generally as broad as the class of higher and lower plants including, but not limited to, dicotyledonous plants, monocotyledonous plants, and plant crops, including, but not limited to, vegetable crops, fruit crops, ornamental crops, and meats.

"Vegetable crops" include, but are not limited to, asparagus, beet (e.g., sugar beet and fodder beet), beans, broccoli, cabbage, carrot, cassava, cauliflower, celery, cucumber, eggplant, garlic, gherkin, leafy greens (lettuce, kale, spinach, and other leafy greens), leek, lentils, mushroom, onion, peas, pepper (e.g., sweet peppers, bell peppers, and hot peppers), potato, pumpkin, sweet potato, snap bean, squash, tomato, and turnip.

"Fruit crops" include, but are not limited to, apple, avocado, banana, soft fruits, such as, strawberry, blueberry, raspberry, blackberry, cranberry, currents and other types of soft fruit berries, carambola, cherry, citrus (e.g., oranges, lemon, lime, mandarin, grapefruit, and other citrus), coconut, fig, grapes, guava, kiwifruit, mango, nectarine, melons (including cantaloupe, muskmelon, watermelon, and other melons), olive, papaya, passionfruit, peach, pear, persimmon, pineapple, plum, and pomegranate. More specifically, horticultural crops of the present disclosure include, but are not limited to, soft fruits (e.g., grape, apple, pear, and persimmon) and berries (e.g., strawberries, blackberries, blueberries, and raspberries).

"Ornamental crops" include, but are not limited to, baby's breath, carnation, dahlia, daffodil, geranium, gerbera, lily, orchid, peony, Queen Anne's lace, rose, snapdragon, or other cut-flowers or ornamental flowers, potted flowers, flower bulbs, shrub, and deciduous or coniferous tree.

"Meat" or "Meats" include, but are not limited to beef, bison, chicken, deer, goat, turkey, pork, sheep, fish, shellfish, mollusks, or dry-cured meat products.

The term "subliming" refers the ability of a chemical, compound, or composition or other solid substance to evaporate or to disperse into vapor or gas when heated. Often the substance can transition back to a solid upon cooling.

The term "vaporizing" refers to transitioning or converting into vapor.

The term "volatile" or "volatilizes" refers to the ability of a chemical, compound, or composition or other substance to evaporate or to disperse into vapor or gas.

Use of the singular articles such as "a," "the," "said," etc. should be read to recite one or more of the indicated elements unless a claim recites an explicit limitation to the contrary.

### COMPOUNDS AND COMPONENTS OF THE PRESENT METHODS

The methods of the present disclosure are directed to treating food packaging materials or containers with one or more volatile antimicrobial compounds. More specifically, the methods described herein provide for coating benzoxaborole compounds on surfaces of food packaging materials or containers in order to delay or inhibit microorganism growth and food decay. Accordingly, the methods of the present disclosure comprise, consist of, or consist essentially of benzoxaborole compounds.

Exemplary embodiments of the compounds of the present disclosure comprise Compounds A, B, and C, which may encompass diastereomers and enantiomers of the illustrative compounds. Enantiomers are defined as one of a pair of molecular entities which are mirror images of each other and non-superimposable. Diastereomers or diastereoisomers are defined as stereoisomers other than enantiomers. Diastereomers or diastereoisomers are stereoisomers not related as mirror images. Diastereoisomers are characterized by differences in physical properties.

One exemplary embodiment of a benzoxaborole compound of the present method is Compound A:

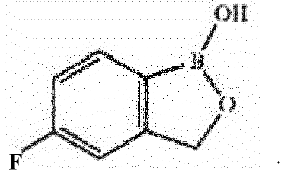

An additional illustrative embodiment of a benzoxaborole compound of the present method is Compound B:

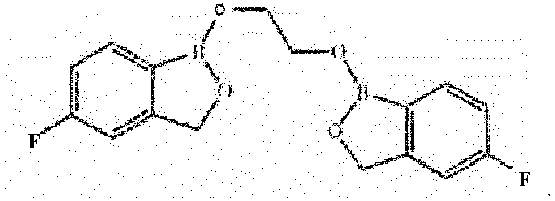

Another exemplary embodiment of a benzoxaborole compound of the present method is Compound C, which is a salt version of Compounds A and/or B:

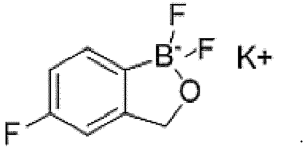

Compounds A, B, and/or C may be used individually or as a mixture or combination. The benzoxaborole compounds may also be used in combination with a carrier to form a benzoxaborole treatment. The benzoxaborole treatment provides antimicrobial protection to food, such as plants, crops, or meats, when administered, applied, or exposed to the plants, crops, or meats. While the mechanism of action of the benzoxaborole compound is not fully understood, it is thought to proceed via blocking or inhibition of protein synthesis in microorganisms and/or blocking cytoplasmic leucyl-tRNA synthetase (LeuRS) activity, thereby preventing growth of microorganisms on food.

Benzoxaborole Compounds A, B, and/or C may be used in any form, including, but not limited to, a liquid, a solid, or a gaseous composition. In particular, the present method provides application of a benzoxaborole compound to food product packaging materials as a spray, a mist, a gel, a thermal and non-thermal fog, a dip, a drench, a vapor, a gas, or via sublimation.

Carriers of the present disclosure may be combined with one or more active benzoxaborole compounds to form a benzoxaborole treatment. Treatment carriers of the present disclosure may comprise gases, solutions, solvents, or chemicals. For example, a liquid carrier of the present disclosure may comprise water, buffer, saline solution, a solvent, or solvent-based solution, etc. Illustrative liquid solvent carriers of the present disclosure include, but are not limited to, liquid carbon dioxide (CO₂), such as supercritical CO₂. Gaseous carriers of the the benzoxaborole compounds may comprise nitrogen (N₂), carbon dioxide (CO₂), or sulfur dioxide (SO₂).

Benzoxaborole compound treatments comprising Compounds A, B, and/or C, with or without a carrier, may be applied to packaging materials. More specifically, the benzoxaborole treatments of the present disclosure may be applied, imbedded, impregnated, or coated onto or into one or more surfaces of a packaging material (e.g., PET clamshells or liner materials) or a device (e.g., a container or a chamber), collectively and interchangeably called a "chamber." When coated onto or imbedded into surfaces of packaging materials, the benzoxaborole compound treatment volatilizes to treat food products, which ultimately preserves freshness of the food. Thus, the compound treatments of the present disclosure allow for the uniform treatment of food packaging materials to protect food products comprised therein.

A chamber of the present disclosure may be any container in which a food product may be comprised therein for harvest, storage, and/or retail usage. For example, a chamber may be made of any material sufficient to hold food including, but not limited to, cardboard, paper, paperboard, corrugated paper, plastic (e.g., thermosets and thermoplastics), glass, polystyrene, cellulosic material, metals (e.g., aluminum, foils, laminates, tinplate, and/or steel, such as tin-free steel), or any other semipermeable or impermeable material. Exemplary chambers of the present disclosure may be made of polyester, such as polycarbonate, polyethylene naphthalate, and polyethylene terephthalate (i.e., PET or PETE). Thus, an illustrative embodiment of a chamber of the present disclosure is a PET clamshell.

The chamber of the present disclosure may be of any size to hold food products within the packaging materials, such as an individual or singulated chamber embodiment. For example, illustrative individual chambers may have a volume ranging from about 0.1 liters (L) to about 50 L, from about 0.1 L to about 40 L, from about 0.1 L to about 30 L, from about 0.1 L to about 20 L, from about 0.1 L to about 10 L, from about 0.1 L to about 5 L, from about 0.1 L to about 4 L, from about 0.1 L to about 3 L, from about 0.1 L to about 2 L, from about 1 L to about 50 L, from about 5 L to about 40 L, from about 20 L to about 40 L, from about 25 L to about 50 L, from about 30 L to about 40 L, from about 35 L to about 40 L, and at about 0.1 L, about 0.2 L, about 0.3 L, about 0.4 L, about 0.5 L, about 1 L, about 2 L, about 10 L, about 20 L, about 30 L, about 35 L, about 40 L, and about 50 L.

An additional chamber embodiment may be capable of holding a plurality of individual chambers. A plurality of individual chambers, such a PET clamshells, may include two or more to thousands, to many thousands to tens or hundreds of thousands or millions of PET clamshells. For example, one box may comprise about 384 clamshells, and a chamber embodiment may comprise thousands of boxes of clamshells (e.g., from about 384,000 to about 3,840,000 to about 384,000,000 of clamshells). Thus, a plurality of PET clamshells is also an illustrative embodiment of the chamber of the present disclosure, which is particularly utilized for large-scale and/or commercial treatment methods of chambers.

A further embodiment of the chamber of the present disclosure may comprise a liquid-absorbing material. The liquid-absorbing material may be comprised within the chamber, such as on the internal top, bottom or side panels of the chamber. The liquid-absorbing material may be comprised on the exterior of the chamber, such as on the external top, bottom or side panels of the chamber. The liquid-absorbing material may also be comprised on or in one or more liners, wrapping, labels, tags, stickers, pads, or other packing components located, attached, and/or affixed to the inside or the outside of the chamber.

The liquid-absorbing material may comprise any material that is able to absorb and retain a liquid composition of the active compound. For example, illustrative embodiments of the liquid-absorbing material include, but are not limited to, cotton, paper, foam, etc.

Absorption of an active ingredient (i.e., benzoxaborole) into the liquid-absorbing material enables the liquid-absorbing material to serve as a reservoir capable of releasing the benzoxaborole treatment to the food product comprised in the chamber over a time period. The liquid-absorbing material may provide for slow-release or quick-release of the benzoxaborole treatment to the food product. Thus, the liquid-absorbing material enables differential treatment of the food product based on the time period required for protection of food products comprised therein. For example, food products that need limited antimicrobial protection may be packaged in a chamber comprising a quick-release liquid-absorbing material, while food products requiring an extended term of antimicrobial protection may be packaged in a chamber comprising a slow-release liquid-absorbing material.

Slow-release liquid-absorbing materials include, but are not limited to, materials that enable the release of the active ingredient to the food product for a time period of over 12 hours, such as from over 12 hours to about 31 days, including from over 12 hours to about 25 days, from over 12 hours to about 20 days, from over 12 hours to about 15 days, from over 12 hours to about 10 days, from over 12 hours to about 5 days, from over 12 hours to about 30 days, from over 12 hours to about 24 days, from about 24 hours to about 30 days, from about 2 days to about 28 days, from about 3 days to about 25 days, from about 4 days to about 20 days, and about 5 days, about 10 days, about 15 days, about 20 days, about 25 days, about 30 days, and any number of days between 1 day to 30 days.

Quick-release liquid-absorbing materials include, but are not limited to, materials that enable the release of the active ingredient to the food product for a time period ranging from about 12 hours or less, such as from about 5 seconds to about 12 hours, from about 5 seconds to about 10 hours, from about 10 seconds to about 8 hours, from about 15 seconds to about 6 hours, from about 20 seconds to about 4 hours, from about 25 seconds to about 2 hours, from about 5 seconds to about 1 hour, from about 10 seconds to about 45 minutes, from about 15 seconds to about 30 minutes, from about 20 seconds to about 15 minutes, from about 25 seconds to about 5 minutes, from about 5 seconds to about 1 minute, from about 5 seconds to about 30 seconds, from about 5 seconds to about 15 seconds, and from about 5 seconds to about 10 seconds.

The chamber may also comprise one or more holes or apertures. The apertures may have any shape, and may have a size ranging from about 2 mm to about 2 cm, and from about 2.5 mm to about 1.5 cm, from about 5 mm to about 1.5 cm, from about 7.5 mm to about 1.25 cm, from about 10 mm to about 1 cm, from about 15 mm to about 0.75 cm, from about 20 mm to about 0.5 cm, and from about 25 mm to about 0.25 cm. In addition, the apertures may be in any location on the chamber material, but typically, the apertures are located at the base, the lid, the sides, or a combination thereof on the chamber. The apertures allow for introduction of treatment to the chamber and/or release of treatment from the chamber.

Upon introduction of compound treatment into or onto the chamber, the apertures permit uniform distribution of treatment vapor, gas, or fog particles throughout the chamber. The apertures also allow for full drainage, venting, and/or release of the unused portion of the treatment or treatment carrier from the chamber. Unused treatment and/or treatment carrier may be recycled to treat subsequent and/or additional containers, materials, or chambers.

An illustrative example of a product of the method described herein is one or more benzoxaborole-treated PET clamshell, such as a plurality of PET clamshells. PET clamshells are commonly used to transport strawberries and other soft fruits. Therefore, a benzoxaborole-treated PET clamshell would provide the greatest protection to the fruit contained therein since the active ingredient is coated on the surfaces of the primary packaging of the fruit. Primary protection of the fruit could also occur via treatment of a material contained within the PET clamshell, such as a liquid-absorbing material in the form of a tag, a pad, or other embodiments described herein. Secondary protection of the fruit would occur by applying the active ingredient to a liner, a box, a bag, a wrap or other packaging material in which the primary chambers are placed for storage or transport.

### METHODS OF ADMINISTERING BENZOXABOROLE COMPOUNDS

The present disclosure is directed to methods of uniformly treating food products by providing antimicrobial protection to food, such as plants, crops, and meats. The present methods are directed to large-scale treatment of food packaging materials to uniformly protect plants from plant pathogens and microorganisms that cause food decay. More specifically, plant pathogens that inhibit, reduce, or compromise food freshness may be treated, prevented, or eradicated by the methods described herein.

Exemplary, microorganisms encompassed by the present disclosure include, but are not limited to, *Botrytis cinerea, Mucor piriformis, Fusarium sambucinum, Aspergillus brasiliensis,* and *Peniciliium expansum.* Additional pathogens encompassed by the present invention include, but are not limited to *Acremonium* spp., *Albugo* spp., *Alternaria* spp., *Ascochyta* spp., *Aspergillus* spp., *Botryodiplodia* spp., *Botryospheria* spp., *Botrytis* spp., *Byssochlamys* spp., *Candida* spp., *Cephalosporium* spp., *Ceratocystis* spp., *Cercospora* spp., *Chalara* spp., *Cladosporium* spp., *Colletotrichum* spp., *Cryptosporiopsis* spp., *Cylindrocarpon* spp., *Debaryomyces* spp., *Diaporthe* spp., *Didymella* spp., *Diplodia* spp., *Dothiorella* spp., *Elsinoe* spp., *Fusarium* spp., *Geotrichum* spp., *Gloeosporium* spp., *Glomerella* spp., *Helminthosporium* spp., *Khuskia* spp., *Lasiodiplodia* spp., *Macrophoma* spp., *Macrophomina* spp., *Microdochium* spp., *Monilinia* spp., *Monilochaethes* spp., *Mucor* spp., *Mycocentrospora* spp., *Mycosphaerella* spp., *Nectria* spp., *Neofabraea* spp., *Nigrospora* spp., *Penicillium* spp., *Peronophythora* spp., *Peronospora* spp., *Pestalotiopsis* spp., *Pezicula* spp., *Phacidiopycnis* spp., *Phoma* spp., *Phomopsis* spp., *Phyllosticta* spp., *Phytophthora* spp., *Polyscytalum* spp., *Pseudocercospora* spp., *Pyricularia* spp., *Pythium* spp., *Rhizoctonia* spp., *Rhizopus* spp., *Sclerotium* spp., *Sclerotinia* spp., *Septoria* spp., *Sphaceloma* spp., *Sphaeropsis* spp., *Stemphyllium* spp., *Stilbella* spp., *Thielaviopsis* spp., *Thyronectria* spp., *Trachysphaera* spp., *Uromyces* spp., *Ustilago* spp., *Venturia* spp., and *Verticillium* spp., and bacterial pathogens, such as *Bacillus* spp., *Campylobacter* spp., *Clavibacter* spp., *Clostridium* spp., *Erwinia* spp., *Escherichia* spp., *Lactobacillus* spp., *Leuconostoc* spp., *Listeria* spp., *Pantoea* spp., *Pectobacterium* spp., *Pseudomonas* spp., *Ralstonia* spp., *Salmonella* spp., *Shigella* spp., *Staphylococcus* spp., *Vibrio* spp., *Xanthomonas* spp., and *Yersinia* spp.

Benzoxaborole treatments may be applied, administered, or coated on the inside or the outside of a chamber or packaging material. When the benzoxaborole treatment is in liquid form, a drying step is provided in the present method that allows excess treatment carrier to dry. This step may also produce a residue of the active benzoxaborole ingredient at the proper levels of efficacy on the surface of the food packaging material in order to provide extended antimicrobial control and inhibition for plants, crops, and meats contained therein.

Any food product, including plants, crops, or meats, may be treated using the present method. Minimally-processed packaged products (e.g., packaged vegetables, fruits, or meats) may also be treated with the method described herein. Horticultural crops of the present method include, but are not limited to, vegetable crops, fruit crops, edible nuts, flowers and ornamental crops, nursery crops, aromatic crops, and medicinal crops.

Plants and agricultural crops in any production cycle may be used in the method of the present application. For example, post-harvest plants and crops may be treated during field packing, palletization, in-box, storage, and throughout the distribution network. Further, plants being transported by any mode, including, but not limited to local vehicles, transport trailers, marine containers, aircraft containers, etc. may be treated using the method described herein.

The chamber or plurality of chambers of the present disclosure are treated prior to use during food field-packaging of plants, meats, or crops, such as soft fruits. For example, treated chambers may be located, stored, and/or kept at the site of clamshell manufacturers, at the central facility of farmers or ranchers, or in a portable unit for immediate in-field treatments. Additionally, treated chambers or materials may be provided to a food producer directly from the manufacturer, wherein the manufacturer has previously applied benzoxaborole to the surface of the packaging. Alternatively, a food producer may independently use a method, machine, or instrument to treat containers or packaging materials with the benzoxaborole compositions as described herein.

Large-scale treatment of food product packaging materials and chambers are comprised in the methods of the present disclosure. Large-scale treatment comprises treatment of chambers or a plurality of chambers in mass, and typically for commercial and/or industrial use. For example, the methods of the present disclosure may comprise treating a plurality of chambers with the benzoxaborole active ingredient described herein. Large-scale treatment methods of the present disclosure may occur before the chamber has been formed (i.e., preformation), during formation of the chamber (i.e., formation), and after the chamber has been formed (i.e., postformation). Formation is the process of forming or producing one or more chambers of the present disclosure, which may include thermoforming.

Preformation treatment of the chamber comprises contacting a packaging material, such as plastic, that will be formed into the chamber with an active ingredient of the present disclosure (e.g., benzoxaborole) prior to the beginning of the formation process. Formation comprises treatment of the packaging material of the chamber with the active ingredient after the formation process has started. Postformation treatment of the chamber occurs when the packaging material has been formed into a chamber and the chamber is then treated with the active ingredient. For example, the chambers may be treated with the active ingredient prior to, during, or after formation of the chamber using methods including, but not limited to, dipping, drenching, spraying, painting, vaporizing, and/or sublimation.

One embodiment of the large-scale method described herein comprises use of a printer to print the active compound treatment on the lining or material of a plurality of chambers. Another embodiment of the large-scale treatment method comprises spraying the plurality of chambers with the active compound treatment. A further embodiment of the large-scale treatment method comprises dipping a plurality of chambers into a vat of active compound treatment and removing the treated chambers to dry onto the chamber material. Additionally, fogging or spraying a plurality of chambers with the active compound during manufacturing in an industrial-sized device is also an embodiment of the large-scale method of the present disclosure.

Food products may or may not be inside of the chamber during application of the benzoxaborole treatment. If the food product is already inside the chamber, treatment of the chamber with the active ingredient may be applied while the chamber is open, closed, or sealed. Typically, however, after the treated chambers are produced, food products, such as plants, crops, or meats, may be manually or robotically (e.g., by a machine) placed in the treated chamber in preparation for antimicrobial treatment of the food.

The proximity and/or distance between the emitting source of active ingredient and the food product is critical. Notably, the distance from the benzoxaborole coated surfaces of the packaging material or chamber and the food product is inversely related to the efficacy of antimicrobial protection of the food. In other words, the greater the distance between the coated/treated surfaces of the material or chamber and the food product, the lesser is the level of antimicrobial protection conveyed to the treated food product, including plants, crops, or meat.

Related to this property, treated surfaces of a chamber or packaging material, such as a bag, a box, a wrap, a liner, or other packaging material that is placed over an entire pallet of clamshells of food products may be less effective in delivering the active ingredient to the food than a treated surface that is immediately adjacent to or in contact with the plant, crop, or meat food products, such as the clamshell surfaces themselves. Therefore, having the treatment coated directly on a surface or imbedded into the individual product chamber that is the primary packaging material, meaning the first layer of packaging of the food product, provides the greatest antimicrobial protection to the food product. Similarly, treating the internal surface of the primary packaging material, such as a chamber, provides even greater antimicrobial effect than treating an external surface of the chamber. Therefore, the distance between the emitting source of the active ingredient and the food product should be minimized for best results.

More specifically, the distance between the emitting source and the food product should remain less than about 6 feet. In an illustrative embodiment, the distance between the emitting source and the food product ranges from about 0.1 inches to about 6 feet, from about 0.5 inches to about 5 feet, from about 1 inch to about 4 feet, from about 1.5 inches to about 3 feet, from about 2 inches to about 2 feet, from about 0.5 inches to about 12 inches, from about 1 inch to about 24 inches, from about 0.5 inches to about 6 inches, from about 0.5 inches to about 5 inches, from about 0.5 inches to about 4 inches, from about 0.5 inches to about 3 inches, from about 0.5 inches to about 2 inches, and from about 0.5 inches to about 1 inch, wherein an inch is equal to 2.54 cm. Close proximity of the emitting source of the benzoxaborole active ingredient applied to the primary PET clamshell ensures that the food product is exposed to the active ingredient which inhibits microorganisms that may infect the food.

An exemplary embodiment of the method described herein comprises vaporizing or subliming the benzoxaborole compound or molecule into a gaseous form. The benzoxaborole compound gas or vapor may be at any concentration that allows the compound or molecule to adhere to the chamber (e.g., a clamshell) or packaging surfaces prior to taking the chamber or material into a field for the harvest operation.

For example, the benzoxaborole compound vapor or gas may be effectively administered to a chamber at a concentration ranging from about 0.1 mg/chamber to about 10 mg/chamber, from about 0.1 mg/chamber to about 8 mg/chamber, from about 0.1 mg/chamber to about 7 mg/chamber, from about 0.1 mg/chamber to about 6 mg/chamber, from about 0.1 mg/chamber to about 5.5 mg/chamber, from about 0.1 mg/chamber to about 5 mg/chamber, from about 0.1 mg/chamber to about 4 mg/chamber, from about 0.1 mg/chamber to about 3.5 mg/chamber, from about 0.1 mg/chamber to about 3.2 mg/chamber, from about 0.1 mg/chamber to about 2 mg/chamber, from about 0.1 mg/chamber to about 1.5 mg/chamber, from about 0.1 mg/chamber to about 1 mg/chamber, from about 0.1 mg/chamber to about 0.35 mg/chamber, from about 0.1 mg/chamber to about 0.32 mg/chamber, from about 0.1 mg/chamber to about 0.25 mg/chamber, from about 0.1 mg/chamber to about 0.22 mg/chamber, 0.2 mg/chamber to about 8 mg/chamber, from about 0.2 mg/chamber to about 7 mg/chamber, from about 0.2 mg/chamber to about 6 mg/chamber, from about 0.2 mg/chamber to about 5.5 mg/chamber, from about 0.2 mg/chamber to about 5 mg/chamber, from about 0.2 mg/chamber to about 4 mg/chamber, from about 0.2 mg/chamber to about 3.5 mg/chamber, from about 0.2 mg/chamber to about 3.2 mg/chamber, from about 0.2 mg/chamber to about 2 mg/chamber, from about 0.2 mg/chamber to about 1.5 mg/chamber, from about 0.2 mg/chamber to about 1 mg/chamber, from about 0.2 mg/chamber to about 0.35 mg/chamber, from about 0.2 mg/chamber to about 0.32 mg/chamber, from about 0.2 mg/chamber to about 0.25 mg/chamber, from about 0.2 mg/chamber to about 0.22 mg/chamber, 0.2 mg/chamber to about 8 mg/chamber, from about 0.3 mg/chamber to about 7 mg/chamber, from about 0.3 mg/chamber to about 6 mg/chamber, from about 0.3 mg/chamber to about 5.5 mg/chamber, from about 0.3 mg/chamber to about 5 mg/chamber, from about 0.3 mg/chamber to about 4 mg/chamber, from about 0.3 mg/chamber to about 3.5 mg/chamber, from about 0.3 mg/chamber to about 3.2 mg/chamber, from about 0.3 mg/chamber to about 2 mg/chamber, from about 0.3 mg/chamber to about 1.5 mg/chamber, from about 0.3 mg/chamber to about 1 mg/chamber, from about 0.3 mg/chamber to about 0.35 mg/chamber, from about 0.3 mg/chamber to about 0.32 mg/chamber, and at about 0.2 mg/chamber, 0.316 mg/chamber, 1 mg/chamber, 3.16 mg/chamber, and 5 mg/chamber.

Alternatively, the benzoxaborole compound may be prepared as a liquid formulation. Preparing a liquid composition of the benzoxaborole treatment requires mixing the benzoxaborole compound with a liquid carrier, such as a solvent or water or combination thereof. Once the liquid treatment is prepared, the chamber or material is drenched or flooded with the liquid treatment, such that the liquid treatment touches all internal surfaces. Most of the liquid treatment carrier may then be drained from an aperture or hole in the chamber or material. After the carrier is substantially removed from the chamber, residue of the active ingredient (i.e., benzoxaborole) in the remaining liquid is allowed to dry, such as at room temperature (e.g., about 21°C to about 23°C).

Drying of the treatment composition, including the liquid carrier, may occur instantaneously or within seconds (secs). In particular, the higher the concentration of active ingredient (i.e., benzoxaborole) and the lower the volume of compound treatment, the less time is required for drying the treatment composition onto the chamber. For example, drying time of the treatment composition onto the chamber material may range from about 0.1 secs to about 60 secs, from about 0.2 secs to about 45 secs, from about 0.3 secs to about 30 secs, from about 0.4 secs to about 20 sec, from about 0.5 secs to about 15 secs, from about 1 sec to about 10 secs, from about 5 secs to about 60 secs, and at about 5 secs. Once dried, the active benzoxaborole ingredient is coated onto the surface of the chamber to provide immediate antimicrobial protection to food, such as plants, crops, or meats placed therein.

As previously mentioned, a liquid benzoxaborole treatment may be administered to a fruit or a vegetable clamshell, such that all internal surfaces of the chamber come into contact with the active ingredient. After draining the treatment carrier (e.g., water or solvent) from the clamshell, warm air (i.e., room temperature) is applied to dry the remaining liquid on the clamshells. The treated clamshells comprising the coated surfaces and active ingredient may then go immediately to the field for picking operations. Food, such as fresh fruits and berries placed within the treated clamshells, is protected from disease microorganisms by the volatile active ingredient (i.e., benzoxaborole) emitted from the surface of the clamshells from the time the fruit is placed inside of the chamber.

In yet another embodiment of the present method, the benzoxaborole active ingredient may be administered by fogging as a fine mist into a suitable chamber. The compound may be fogged using any cold, thermal, ultrasonic, or similar fogging-based technologies. The micron particles of water, solvent, or other carriers in the formulations may assist distribution and deposition of the benzoxaborole particles on the chamber surfaces. Upon drying, the method will result in a thin coating of active ingredient on the chamber surfaces. This thin coating of benzoxaborole will volatilize over time, and uniformly protect the food contents of the chamber from pathogenic infection and decay.

Accordingly, the method described herein provides a large-scale administration of an antimicrobial agent, such as benzoxaborole, to the packaging surfaces of food product chambers. Importantly, the presently described method enables greater uniformity and consistency of application of the active benzoxaborole treatment composition to the food packaging materials. Ultimately, the present large-scale method of uniformly treating food chambers results in a significantly extended time period (i.e., up to about 31 days or a full month) of antimicrobial protection of the food product comprised within the treated chambers.

### EXAMPLES

Illustrative embodiments of the methods of the present disclosure are provided herein by way of examples. While the concepts and technology of the present disclosure are susceptible to broad application, various modifications, and alternative forms, specific embodiments will be described here in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

The following experiments were used to determine the effect of different concentrations of benzoxaborole compounds when administered onto the surfaces of packaging materials or chambers by various application techniques. In the following experiments, benzoxaborole treatment compositions are applied to chambers such that food products may be exposed to the antimicrobial treatment for an initial time period. For example, food products may be exposed to the benzoxaborole treatment on the surfaces of the treated chamber for the initial time period ranging from less than 1 day to about 8 days, and at about 5 days. Treatment temperatures of the chamber during the initial time period ranged from about 0.5°C to about 5°C, and at about 1°C.

After the initial time period in which the food is exposed to the active ingredient of the treated chamber, the chamber may be unsealed (if previously sealed), and allowed to vent for a secondary time period. The food may remain in the chamber for the secondary time period ranging from about 1 day to about 8 days, and at about 6 days. The temperature of the chamber during the second time period remains at room temperature, which ranges from about 20°C to about 23°C, and at about 21°C.

After expiration of the secondary time period, inhibition of plant pathogens and infection may be assessed. For example, *in vitro* samples may have the growth of the microorganism or pathogen on agar or in media assessed, evaluated, and compared to a control sample where no benzoxaborole treatment was administered. Similarly, *in vivo* samples may have the severity and incidence of pathogenic disease assessed, evaluated, and compared to a control sample where no benzoxaborole treatment was administered or different treatment conditions were applied.

### Example 1: Benzoxaborole Compound Treatment of Fruit Clamshells by Spraying, Painting, and Sublimation (In Vivo)

An *in vivo* assay was used to evaluate the ability of Compound A to volatilize from a clamshell chamber and control pathogenic infection when applied by various techniques. Multiple empty 1-lb PET clamshells (ProducePackaging.com, #036QT) were placed inside triplicate air-tight 36 L chamber (Fisher Scientific, Catalogue #08-642-23C) fitted with a bulkhead septum port (Swagelok, SS-401-61, Solon, OH).

An appropriate amount of Compound A, to achieve a final treatment rate of 5 mg per clamshell (i.e., 5 mg/clamshell), was dissolved in acetone and 100 µL of the solution was pipetted into a small glass tube. The tube was then placed inside a pre-heated sublimation device (0.5" OD by 6" long thermostatically healed copper tube mounted to a 2 L/min aquarium pump) set at 60°C for 1 minute to allow the acetone to evaporate. Compound A was then introduced into the cabinets of the chamber through the bulkhead port containing the clamshells by using the sublimation device set at 180°C. Compound A headspace was permitted to equilibrate overnight at 21°C

Five milligrams of Compound A was dissolved in 1 ml of ethanol prior to being uniformly administered to the interior of the clamshell by painting or spraying, and then dried for 5 minutes. After coating the clamshells with Compound A using various application techniques (i.e., sublimation, spraying, or painting), eight ethanol-washed strawberries were placed in the clamshell with stem end facing downwards. Each strawberry fruit was wounded using a T15 screwdriver tip to a uniform depth of eight mm (8mm). Each fruit wound was inoculated with 20 µL of 1×10⁵ spores/ml pathogen spore suspension of *Botrytis cinerea,* which is a fungal pathogen known to cause gray mold infection of fruits, such as grapes and strawberries. Uninoculated strawberries were removed from their commercial package, and directly transferred into treated clamshells without any washing or inoculation steps.

Treated clamshells lids were closed, and then placed at 1°C for an initial time period of 5 days. Clamshells were then removed from low temperature, and held for a second time period of 6 days at room temperature where the point of inoculation on the strawberry fruits was assessed for indication of disease incidence reported as a percentage (%). Severity of disease incidence was also reported. Disease severity was rated on a scale ranging from 0 to 4, where "0" indicated no disease severity, "1" indicated minimal disease severity, "2" indicated medium disease severity, "3" indicated high disease severity, and "4" indicated exceptionally high disease severity.

The outcome of this *in vivo* experiment is summarized in Table 1. Results demonstrate good *in vivo* antimicrobial activity of Compound A against *B. cinerea,* with a reduction in disease incidence and severity with all three application techniques (i.e., painting, spraying, and sublimation). In particular, each method of treating clamshells showed significant inhibition of gray mold incidence and severity in strawberries as compared to control. More specifically, on Days 1-6, the percentage of gray mold incidence increased from 30.5% to 100% and 0% to a maximum of 0.9% in control fruits and treated inoculated fruits, respectively. Even in uninoculated fruit, the percentage of gray mold incidence increased from 1.5% to 100% and 0% to a maximum of 21.7% in control fruits and treated fruits, respectively. In both inoculated and uninoculated fruits, the spraying technique was comparable to or better than painting or sublimation in minimizing the incidence or severity of gray mold. Ultimately, treating the clamshells with benzoxaborole Compound A significantly inhibited the growth of *B. cinerea* in the strawberries and preserved the freshness of the fruit for at least 3 days longer than the untreated strawberries.

### Example 2: Benzoxaborole Compound Treatment of Clamshells Containing Agar Plates by Spraying, Painting, and Sublimation (In Vitro)

An *in vitro* assay was used to evaluate the ability of Compound A to volatilize from a clamshell to control fungal pathogenic infection when applied to the clamshell by various application techniques. Multiple empty 1-lb PET clamshells (ProducePackaging.com, #036QT) were placed inside triplicate air-tight 36 L chamber (Fisher Scientific, Catalogue #08-642-23C) fitted with a bulkhead septum port (Swagelok, SS-401-61, Solon, OH).

An appropriate amount of Compound A to achieve a final treatment rate of 5 mg/clamshell, 1 mg/clamshell, or 0.2 mg/clamshell, was dissolved in acetone and 100 µL of the solution was pipetted into a small glass tube. The tube was then placed inside a pre-heated sublimation device (0.5" OD by 6" long thermostatically healed copper tube mounted to a 2 L/min aquarium pump) set at 60°C for 1 minute to allow the acetone to evaporate. Compound A was then introduced into the cabinets of the chamber through the bulkhead port containing the clamshells by using the sublimation device set at 180°C. Compound A headspace was permitted to equilibrate overnight at 21°C.

For paint and spray applications, 5 mg of Compound A was dissolved in 1 ml of ethanol prior to uniformly painting or spraying the interior of the clamshell. After spraying or painting, the clamshell was then permitted to dry for 5 minutes. After coating the clamshells with Compound A using various applications (i.e., sublimation, spraying, or painting), 10-cm Petri plates containing half strength Potato Dextrose Agar were inoculated with 1 µL of 1 × 10⁵ spores/ml *Botrytis cinerea* spore suspension. The inoculated petri plates were then sealed with a breathable film (AeraSeal; P/N: B- 100, Excel Scientific, Victorville, CA), and placed inside the treated clamshell.

To determine the period of time coated packaging could release effective levels of the active ingredient, treated clamshells containing the inoculated plates were then placed inside a 2.55 L SnapWare airtight container (Model# 109842) for three (3) days at 21°C (Series I). After incubation, plates were removed and cultures were evaluated for percent growth relative to a control based on measurement of fungal colony diameter (mm).

**Table 1. Comparison of in-clamshell Compound A application techniques to control growth of Botrytis cinerea inoculated strawberries as compared to uninoculated fruit.**

| **Inoculated Fruit** | Gray Mold Incidence (%) | | | | | | |
|---|---|---|---|---|---|---|---|
| | Day 0 | Day 1 | Day 2 | Day 3 | Day 4 | Day 5 | Day 6 |
| Control | 30.5 | 62.1 | 84.3 | 93.5 | 100.0 | 100.0 | 100.0 |
| Paint | 0.0 | 0.0 | 0.0 | 0.0 | 0.0 | 0.0 | 0.0 |
| Spray | 0.0 | 0.0 | 0.0 | 0.0 | 0.0 | 0.0 | 0.0 |
| Sublimation | 0.0 | 0.0 | 0.0 | 0.0 | 0.0 | 0.9 | 0.9 |

| | Gray Mold Severity (0 -4) | | | | | | |
|---|---|---|---|---|---|---|---|
| | Day 0 | Day 1 | Day 2 | Day 3 | Day 4 | Day 5 | Day 6 |
| Control | 0.2 | 0.4 | 1.1 | 2.1 | 2.6 | 4.0 | 4.0 |
| Paint | 0.0 | 0.0 | 0.0 | 0.0 | 0.0 | 0.0 | 0.0 |
| Spray | 0.0 | 0.0 | 0.0 | 0.0 | 0.0 | 0.0 | 0.0 |
| Sublimation | 0.0 | 0.0 | 0.0 | 0.0 | 0.0 | 0.0 | 0.0 |

| **Uninoculated** Fruit | Gray Mold Incidence (%) | | | | | | |
|---|---|---|---|---|---|---|---|
| | Day 0 | Day 1 | Day 2 | Day 3 | Day 4 | Day 5 | Day 6 |
| Control | 1.5 | 7.1 | 39.9 | 96.7 | 96.7 | 100.0 | 100.0 |
| Paint | 0.0 | 0.3 | 3.9 | 5.1 | 7.4 | 17.0 | 21.7 |
| Spray | 0.0 | 0.6 | 2.1 | 4.8 | 6.0 | 17.9 | 19.9 |
| Sublimation | 0.0 | 0.3 | 1.5 | 3.3 | 5.7 | 16.7 | 20.2 |

| | Gray Mold Severity (0-4) | | | | | | |
|---|---|---|---|---|---|---|---|
| | Day 0 | Day 1 | Day 2 | Day 3 | Day 4 | Day 5 | Day 6 |
| Control | 0.3 | 0.9 | 1.5 | 2.8 | 3.5 | 4.0 | 4.0 |
| Paint | 0.0 | 0.1 | 0.5 | 0.8 | 0.9 | 1.1 | 1.1 |
| Spray | 0.0 | 0.2 | 0.3 | 0.5 | 0.7 | 1.2 | 1.3 |
| Sublimation | 0.0 | 0.1 | 0.3 | 0.7 | 0.9 | 1.1 | 1.3 |

Meanwhile, freshly prepared inoculated plates were placed inside the clamshell for an additional three (3) days of incubation (Series 2). This process, where freshly prepared inoculated plates were placed inside the clamshell, was repeated twice more, to produce a 12 full day evaluation of 4 series of 3 days each. The outcome of this *in vitro* experiment is summarized in Table 2. Results demonstrate good volatile *in vitro* antimicrobial activity of Compound A against *Botrytis cinerea* with all three application techniques (i.e., painting, spraying, and sublimation). In addition, greater inhibition of pathogenic growth was observed at higher treatment rates.

In particular, each technique of treating clamshells showed significant inhibition of mycelial growth. More specifically, administration of 5 mg/clamshell of benzoxaborole treatment by all three techniques were effective to completely inhibit mycelial cell growth the first six days (Table 2). In the remaining six days, sublimation most effectively inhibited mycelial growth (84.4%), followed by spraying (64.9%), and painting (44.7%). At lower treatment concentrations (i.e., 1 mg/clamshell and 0.2 mg/clamshell), all of the treatment techniques failed to inhibit mycelial cell growth by Days 6 to 9. Ultimately, treating the clamshells with benzoxaborole Compound A significantly inhibited the growth of *B. cinerea* inoculated on agar plates placed therein for time periods typical of fruit storage by the supply chain and consumers.

**Table 2. Comparison of treatment techniques of Compound A to volatilize from clamshells and provide in vitro inhibition of Botrytis cinerea**

| Mycelial Growth Inhibition (%) | | | | | |
|---|---|---|---|---|---|
| Method | Rate (mg/clamshell) | Series 1 (0 to 3 days) | Series 2 (3 to 6 days) | Series 3 (6 to 9 days) | Series 4 (9 to 12 days) |
| Sublimation | 5 | 100.0 | 100.0 | 83.1 | 84.4 |
| | 1 | 90.1 | 0.0 | 0.0 | ··· |
| | 0.2 | 90.9 | 0.0 | 0.0 | ··· |
| Paint | 5 | 100.0 | 100.0 | 57.5 | 44.7 |
| | 1 | 100.0 | 18.8 | 0.0 | — |
| | 0.2 | 3.4 | 0,0 | 0.0 | — |
| Spray | 5 | 100.0 | 100.0 | 61.2 | 64.9 |
| | 1 | 100.0 | 18.6 | 0.0 | ··· |
| | 0.2 | 81.2 | 0.0 | 0.0 | |

### Example 3 (not according to the invention): Dose Response of Benzoxaborole Compound Treatment of Fruit Clamshells by Vapor-Coating (In Vivo)

This *in vivo* assay was used to evaluate the ability of vaporized Compound A to volatilize from a clamshell in order to control or inhibit pathogenic microorganisms. This experiment was conducted exactly as described in Example 1, with a few exceptions. After equilibrating the clamshell overnight at 21°C, Compound A was administered to the clamshell as a vapor only. In addition, Compound A was vapor-coated onto the surface of the clamshell at a final treatment rate of 3.16 mg/clamshell, 1 mg/clamshell, or 0.316 mg/clamshell. After vapor-coating application, Compound A headspace was permitted to equilibrate overnight at 21°C. Strawberries were inoculated with *Botrytis cinerea,* placed within the clamshells for an initial time period, and assessed for disease incidence and severity over a second time period as described in Example 1.

The outcome of this *in vivo* experiment is summarized in Table 3. Results demonstrate good *in vivo* antimicrobial activity of Compound A against *B. cinerea,* with a greater reduction in disease incidence and severity observed at higher treatment rates.

In particular, each concentration of active ingredient on treated clamshells showed inhibition of gray mold severity in inoculated strawberries as compared to control (see Table 3). More specifically, on Days 1-6, the percentage of gray mold severity increased from 0.8 to 4.0 in control fruits as compared to 0 to 0.2 and 0 to 0.7 for inoculated fruits treated with 3.16 mg/clamshell or 1 mg/clamshell of Compound A, respectively. At the lower treatment concentration of 0.316 mg/clamshell, the percentage of gray mold severity increased from 0.4 to 3.9. Ultimately, treating the clamshells with different concentrations of benzoxaborole Compound A significantly inhibited the growth of *B. cinerea* in the strawberries in a dose dependent manner.

**Table 3. Dose response of in-clamshell Compound A applied by sublimation to control growth of Botrytis cinerea inoculated on strawberries.**

| Inoculated Fruit | Grav Mold Severity (0-4) | | | | | |
|---|---|---|---|---|---|---|
| Rate (mg per clamshell) | Day 1 | Day 2 | Day 3 | Day 4 | Day 5 | Day 6 |
| 3.16 | 0.0 | 0.0 | 0.0 | 0.0 | 0.1 | 0.2 |
| 1.00 | 0.0 | 0.0 | 0.0 | 0.1 | 0.4 | 0.7 |
| 0.316 | 0.4 | 1.3 | 2.2 | 3.4 | 3.8 | 3.9 |
| Control | 0.8 | 1.8 | 2.7 | 3.6 | 4.0 | 4.0 |

### Example 4: Dose Response of Benzoxaborole Compound Treatment of Fruit Clamshells by Spraying (In Vivo)

This *in vivo* assay was used to evaluate the ability of different concentrations of Compound A to volatilize from clamshell in order to control or inhibit fruit infection by pathogenic microorganism, *Botrytis cinerea.* This experiment was conducted exactly as described in Example 1, with a few exceptions. After equilibrating the clamshell overnight at 21°C, Compound A was administered to the clamshells by spraying only. Compound A was sprayed onto the surface of the clamshells at a final treatment rate of 5 mg/clamshell or 1 mg/clamshell. The clamshells were then permitted to dry for 5 minutes. Strawberries were inoculated with *Botrytis cinerea,* placed within the clamshells for the initial time period (i.e., 5 days), and assessed for disease incidence and severity over the second time period (i.e., 6 days) as described in Example 1.

The outcome of this *in vivo* experiment is summarized in Table 4. Results demonstrate good *in vivo* antimicrobial activity of Compound A against *B. cinerea,* with a reduction in disease incidence and severity with both 5 mg/clamshell and 1 mg/clamshell concentrations applied by spraying. In particular, each concentration of treating clamshells showed inhibition of gray mold incidence and severity in strawberries as compared to control. On Days 1-6, the percentage of gray mold incidence increased from 6.3% to 100% in control inoculated fruits, while there was no growth in 5 mg/clamshell-treated inoculated fruits. Even the 1 mg/clamshell-treated inoculated fruits inhibited gray mold incidence to a 52.5% maximum.

In uninoculated fruit, the percentage of gray mold incidence increased from 0.5% to 78.5% in control fruits, and similarly, from 0% to 100% in 1 mg/clamshell-treated uninoculated fruits. However, the percentage of gray mold incidence only increased from 0.5% to 78.5% in 5 mg/clamshell-treated uninoculated fruits.

In addition, each concentration of active ingredient on treated clamshells showed significant inhibition of gray mold severity in inoculated strawberries as compared to control (see Table 4). More specifically, on Days 1-6, the degree of gray mold severity increased from 0.0 to 4.0 in control fruits as compared to 0 to 1.5 in 1 mg/clamshell-treated inoculated fruits and no growth in 5 mg/clamshell-treated inoculated fruits. For uninoculated fruits, both control and 1 mg/clamshell-treated fruits showed a gray mold severity level of 4.0 by Day 4, while the 5 mg/clamshell-treated uninoculated fruits only showed a gray mold severity level of 3.5 on Day 6. Ultimately, these data demonstrate that treating clamshells with different concentrations of benzoxaborole Compound A significantly inhibited the gray mold infection of *B. cinerea* inoculated in strawberries in a dose dependent manner.

**Table 4. Dose Response of in-clamshell Compound A application techniques to control growth of Botrytis cinerea inoculated in strawberries as compared to uninoculated strawberries.**

| **Inoculated Fruit** | Gray Mold Incidence (%) | | | | | | |
|---|---|---|---|---|---|---|---|
| Rate (mg/clamshell) | Day 0 | Day 1 | Day 2 | Day 3 | Day 4 | Day 5 | Day 6 |
| 5 | 0.0 | 0.0 | 0.0 | 0.0 | 0.0 | 0.0 | 0.0 |
| 1 | 0.0 | 0.0 | 1.3 | 3.8 | 11.3 | 36.3 | 52.5 |
| Control | 6.3 | 72.5 | 100.0 | 100.0 | 100.0 | 100.0 | 100.0 |

| | Gray Mold Severity (0-4) | | | | | | |
|---|---|---|---|---|---|---|---|
| | Day 0 | Day 1 | Day 2 | Day 3 | Day 4 | Day 5 | Day 6 |
| 5 | 0.0 | 0.0 | 0.0 | 0.0 | 0.0 | 0.0 | 0.0 |
| 1 | 0.0 | 0.0 | 0.0 | 0.1 | 0.2 | 0.6 | 1.5 |
| Control | 0.0 | 0.7 | 1.4 | 2.7 | 3.6 | 3.8 | 4.0 |

| **Uninoculated Fruit** | Gray Mold Incidence (%) | | | | | | |
|---|---|---|---|---|---|---|---|
| Rate (mg/clamshell) | Day 0 | Day 1 | Day 2 | Day 3 | Day 4 | Day 5 | Day 6 |
| 5 | 0.5 | 0.5 | 0.9 | 3.3 | 16.2 | 31.9 | 78.5 |
| 1 | 0.0 | 1.9 | 21.6 | 89.5 | 100.0 | 100.0 | 100.0 |
| Control | 1.0 | 6.0 | 46.0 | 100.0 | 100.0 | 100.0 | 100.0 |

| | Gray Mold Severity (0-4) | | | | | | |
|---|---|---|---|---|---|---|---|
| | Day 0 | Day 1 | Day 2 | Day 3 | Day 4 | Day 5 | Day 6 |
| 5 | 0.1 | 0.1 | 0.3 | 0.5 | 1.0 | 1.4 | 3.5 |
| 1 | 0.0 | 0.5 | 1.8 | 3.6 | 4.0 | 4.0 | 4.0 |
| Control | 0.3 | 1.0 | 2.9 | 4.0 | 4.0 | 4.0 | 4.0 |

### Example 5 (not according to the invention): Benzoxaborole Compound Treatment of Fruit Clamshells by Sublimation (In Vivo)

This *in vivo* assay was used to evaluate the ability of Compound A to volatilize from a clamshell in order to control or inhibit fruit infection by pathogenic microorganism, *Botrytis cinerea.* This experiment was conducted exactly as described in Example 1, with a few exceptions. After equilibrating the clamshell overnight at 21°C, Compound A was administered to the clamshell by sublimation only. Compound A was sublimed onto the surface of the clamshell at a final treatment rate of 5 mg/clamshell. Strawberries were inoculated with *Botrytis cinerea,* placed within the clamshell for an initial time period of 6 days, and assessed for disease incidence and severity over a second time period of 7 days as described in Example 1.

The outcome of this *in vivo* experiment is summarized in Table 5. Results demonstrate good *in vivo* antimicrobial activity of Compound A against *B. cinerea,* with a reduction in disease incidence and severity with the 5 mg/clamshell concentrations applied by sublimation. In particular, both inoculated and uninoculated 5 mg/clamshell-treated clamshells showed inhibition of gray mold incidence and severity in strawberries as compared to control. On Days 1-7, the percentage of gray mold incidence increased from 14.6% to 100% in control inoculated fruits, while there was was a maximum of 18.8% of gray mold incidence in 5 mg/clamshell-treated inoculated fruits observed on Day 6.

In uninoculated fruit, the percentage of gray mold incidence increased from 0% to 100% in control fruits, however, the percentage of gray mold incidence only increased to 54.1% in 5 mg/clamshell-treated uninoculated fruits.

**Table 5. Ability of Compound A applied to clamshells by sublimation to control growth of Botrytis cinerea inoculated in strawberries.**

| **Inoculated Fruit** | Gray Mold Incidence% | | | | | | | |
|---|---|---|---|---|---|---|---|---|
| Treatment | Day 0 | Day 1 | Day 2 | Day 3 | Day 4 | Day 5 | Day 6 | Day 7 |
| 5 mg Compound A | 0.0 | 0.0 | 0.0 | 0.0 | 0.0 | 16.7 | 18.8 | 16.7 |
| Control | 14.6 | 52.1 | 91.7 | 95.8 | 97.9 | 100.0 | 100.0 | 100.0 |

| | Gray Mold Severity (0-4) | | | | | | | |
|---|---|---|---|---|---|---|---|---|
| Treatment | Day 0 | Day 1 | Day 2 | Day 3 | Day 4 | Day 5 | Day 6 | Day 7 |
| 5 mg Compound A | 0.0 | 0.0 | 0.0 | 0.0 | 0.0 | 0.1 | 0.2 | 0.3 |
| Control | 0.1 | 0.4 | 0.9 | 2.0 | 3.0 | 4.0 | 4.0 | 4.0 |

| **Uninoculated Fruit** | Gray Mold Incidence% | | | | | | | |
|---|---|---|---|---|---|---|---|---|
| Treatment | Day 0 | Day 1 | Day 2 | Day 3 | Day 4 | Day 5 | Day 6 | Day 7 |
| 5 mg Compound A | 0.0 | 2.6 | 0.1 | 26.3 | 34.1 | 40.0 | 43.3 | 54.1 |
| Control | 0.0 | 23.0 | 0.6 | 95.2 | 100.0 | 100.0 | 100.0 | 100.0 |

| | Gray Mold Severity (0-4) | | | | | | | |
|---|---|---|---|---|---|---|---|---|
| Treatment | Day 0 | Day 1 | Day 2 | Day 3 | Day 4 | Day 5 | Day 6 | Day 7 |
| 5 mg Compound A | 0.0 | 0.4 | 1.0 | 1.0 | 1.0 | 1.3 | 1.3 | 1.6 |
| Control | 0.1 | 1.0 | 1.0 | 2.0 | 2.8 | 4.0 | 4.0 | 4.0 |

In addition, the 5 mg/clamshell concentration of active ingredient on sublimation-treated clamshells showed significant inhibition of gray mold severity in inoculated strawberries as compared to control (see Table 5). More specifically, on Days 1-7, the degree of gray mold severity increased from 0.1 to 4.0 in control inoculated fruits as compared to 0 to 0.3 in 5 mg/clamshell-treated inoculated fruits. For uninoculated fruits, the control fruits showed a gray mold severity level of 4.0 by Day 5, while the 5 mg/clamshell-treated uninoculated fruits only showed a gray mold severity level level of 1.6 on Day 7. Ultimately, this data demonstrate that treating clamshells with 5 mg/clamshell of benzoxaborole Compound A inhibited the gray mold infection of *B. cinerea* inoculated in strawberries.

### Example 6: Benzoxaborole Compound Treatment to Different Locations of Fruit Clamshells by Painting (In Vivo)

This *in vivo* assay was used to evaluate the ability of Compound A to volatilize from different locations of a clamshell (i.e., the base and/or the lid of the clamshell) in order to control or inhibit fruit infection by pathogenic microorganism, *Botrytis cinerea.* This experiment was conducted exactly as described in Example 1, with a few exceptions. Compound A was administered to the clamshell by painting only. 5 mg of Compound A was painted onto the surface of the base of the clamshell or the lid of the clamshell (i.e., 5 mg/clamshell treatment rate). 2.5 mg of Compound A was painted onto the the base and the lid of the clamshell (for a total of 5 mg/clamshell treatment rate). The clamshell was then permitted to dry for 5 minutes. Strawberries were inoculated with *Botrytis cinerea,* placed within the clamshell for an initial time period of 5 days, and assessed for disease incidence and severity over a second time period of 7 days as described in Example 1.

The outcome of this *in vivo* experiment is summarized in Table 6. Results demonstrate good *in vivo* antimicrobial activity of Compound A against *B. cinerea,* with a reduction in disease incidence and severity with the 5 mg/clamshell concentrations applied by painting. In particular, both inoculated and uninoculated 5 mg/clamshell-treated clamshells showed inhibition of gray mold incidence and severity in strawberries as compared to control. On Days 1-7, the percentage of gray mold incidence increased from 0% to 100% in control inoculated fruits, while there was a maximum of 18.8% of gray mold incidence in 5 mg/clamshell base-treated inoculated fruits observed on Day 7. However, inoculated fruits in clamshells painted with 5 mg of Compound A on the lids only or the base and lids showed no incidence of gray mold even by Day 7.

In uninoculated fruit, the percentage of gray mold incidence increased from 0% to 100% in control fruits, however, the percentage of gray mold incidence only increased to 41.1%, 64.4%, and 52.2% in uninoculated fruits painted with 5 mg/clamshell on the base only, the lid only, and the base and lid, respectively.

In addition, the 5 mg/clamshell concentration of active ingredient on painted clamshells showed significant inhibition of gray mold severity in inoculated strawberries as compared to control (see Table 6). More specifically, on Days 1-7, the degree of gray mold severity increased from 0 to 3.6 in control inoculated fruits as compared to 0 to 0.3 in 5 mg/clamshell base-treated inoculated fruits. However, inoculated fruits in clamshells painted with 5 mg of Compound A on the lids only or the base and lids showed no increase in the severity of gray mold even by Day 7.

For uninoculated fruits, the control fruits showed a gray mold severity level of 4.0 by Day 5, while the gray mold severity level level was 1.5, 2.5, and 1.5 on Day 7 in uninoculated fruits painted with 5 mg/clamshell on the base only, the lid only, and the base and lid, respectively. Ultimately, these data demonstrate that treating clamshells with/clamshell of benzoxaborole Compound A significantly inhibited the gray mold infection of *B. cinerea* irrespective of the location of the treatment application.

The preceding description enables others skilled in the art to utilize the technology in various embodiments and with various modifications as are suited to the particular use contemplated. In accordance with the provisions of the patent statutes, the principles and modes of operation of this disclosure have been explained and illustrated in exemplary embodiments. Accordingly, the present invention is not limited to the particular embodiments described and/or exemplified herein.

It is intended that the scope of disclosure of the present technology be defined by the following claims. However, it must be understood that this disclosure may be practiced otherwise than is specifically explained and illustrated without departing from its spirit or scope. It should be understood by those skilled in the art that various alternatives to the embodiments described herein may be employed in practicing the claims without departing from the scope as defined in the following claims.

**Table 6. Ability of Compound A painted on the base, lid, or base and lid of clamshells to control growth of Botryti cinerea inoculated on strawberries.**

| **Inoculated Fruit** | Gray Mold Incidence (%) | | | | | | | | |
|---|---|---|---|---|---|---|---|---|---|
| Treatment Location | Rate (mg) | Day 0 | Day 1 | Day 2 | Day 3 | Day 4 | Day 5 | Day 6 | Day 7 |
| Base | 5 | 0.0 | 0.0 | 12.5 | 12.5 | 0.0 | 0.0 | 18.8 | 18.8 |
| Lid | 5 | 0.0 | 0.0 | 0.0 | 0.0 | 0.0 | 0.0 | 0.0 | 0.0 |
| Base and Lid | 2.5/2.5 | 0.0 | 0.0 | 0.0 | 0.0 | 0.0 | 0.0 | 0.0 | 0.0 |
| Control | 0 | 0.0 | 25.0 | 56.3 | 68.8 | 93.8 | 93.8 | 93.8 | 100.0 |

| | Gray Mold Severity (0-4) | | | | | | | | |
|---|---|---|---|---|---|---|---|---|---|
| Treatment Location | Rate (mg) | Day 0 | Day 1 | Day 2 | Day 3 | Day 4 | Day 5 | Day 6 | Day 7 |
| Location Base | 5 | 0.0 | 0.0 | 0.1 | 0.1 | 0.0 | 0.0 | 0.2 | 0.3 |
| Lid | 5 | 0.0 | 0.0 | 0.0 | 0.0 | 0.0 | 0.0 | 0.0 | 0.0 |
| Base and Lid | 2.5/2.5 | 0.0 | 0.0 | 0.0 | 0.0 | 0.0 | 0.0 | 0.0 | 0.0 |
| Control | 0 | 0.0 | 0.1 | 0.5 | 0.8 | 1.5 | 2.7 | 3.3 | 3.6 |

| **Uninoculated Fruit** | Gray Mold Incidence (%) | | | | | | | | |
|---|---|---|---|---|---|---|---|---|---|
| Treatment Location | Rate (mg) | Day 0 | Day 1 | Day 2 | Day 3 | Day 4 | Day 5 | Day 6 | Day 7 |
| Base | 5 | 0.0 | 0.0 | 0.0 | 0.0 | 2.2 | 10.0 | 26.7 | 41.1 |
| Lid | 5 | 0.0 | 0.0 | 0.0 | 1.1 | 18.9 | 27.8 | 45.6 | 64.4 |
| Base and Lid | 2.5/2.5 | 0.0 | 0.0 | 0.0 | 1.1 | 7.8 | 23.3 | 33.3 | 52.2 |
| Control | 0 | 0.0 | 1.1 | 1.1 | 18.9 | 88.9 | 97.8 | 100.0 | 100.0 |

| | Gray Mold Severity (0-4) | | | | | | | | |
|---|---|---|---|---|---|---|---|---|---|
| Treatment Location | Rate (mg) | Day 0 | Day 1 | Day 2 | Day 3 | Day 4 | Day 5 | Day 6 | Day 7 |
| Base | 5 | 0.0 | 0.0 | 0.0 | 0.0 | 0.3 | 0.8 | 1.2 | 1.5 |
| Lid | 5 | 0.0 | 0.0 | 0.0 | 0.2 | 1.2 | 2.0 | 2.0 | 2.5 |
| Base and Lid | 2.5/2.5 | 0.0 | 0.0 | 0.0 | 0.2 | 0.8 | 1.5 | 1.5 | 1.5 |
| Control | 0 | 0.0 | 0.2 | 0.2 | 1.3 | 3.7 | 4.0 | 4.0 | 4.0 |

## Claims

1. A method of treating a food product with an antimicrobial agent, the method comprising:
administering a benzoxaborole treatment to one or more surfaces of a food packaging material, wherein the benzoxaborole treatment comprises one or more benzoxaborole compounds,
drying the one or more surfaces of the food packaging material,
placing a food product inside of the food packaging material, and
vaporizing the benzoxaborole compound from the one or more surfaces of the food packaging material to treat the food product located therein; wherein the benzoxazole treatment is administered to the food packaging material prior to placing the food product inside the food packaging material;
wherein the benzoxaborole treatment is in liquid form.

2. The method of claim 1, wherein the food product is selected from the group consisting of a strawberry, a raspberry, a blackberry, and a blueberry

3. The method of claim 1, wherein the benzoxaborole compound is 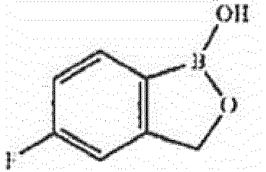 Compound A.

4. The method of claim 1, wherein the benzoxaborole compound Compound B having the structure: 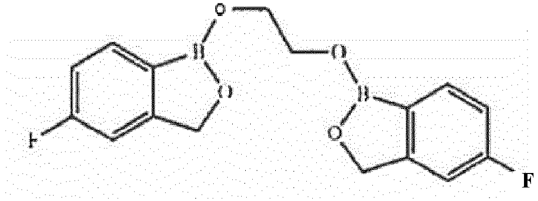 or
wherein the benzoxaborole compound is Compound C having the structure:

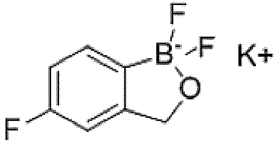

5. The method of claim 1, wherein administering the benzoxaborole treatment to food packaging material further comprises embedding the benzoxaborole compound into the food packaging material, impregnating the food packaging material with the benzoxaborole compound, or coating the food packaging material with the benzoxaborole compound.

6. The method of claim 1, wherein the food packaging material is a chamber.

7. The method of claim 6, wherein the chamber is a clamshell suitably comprising polyethylene terephthalate.

8. A large-scale method of treating a plurality of chambers with an antimicrobial agent, the method comprising:
placing a plurality of chambers in a position to be treated wherein each of the chambers comprise one or more surfaces,
administering the benzoxaborole treatment to one or more surfaces of the plurality of chambers during preformation, formation, or postformation of the plurality of chambers, wherein the benzoxaborole treatment comprises one or more benzoxaborole compounds,
drying the one or more surfaces of the plurality of chambers, and
affixing the benzoxaborole compound to the one or more surfaces of the plurality of chambers;
wherein the benzoxaborole treatment is in liquid form.

9. The method of claim 8, wherein the benzoxaborole compound is Compound A having the structure: 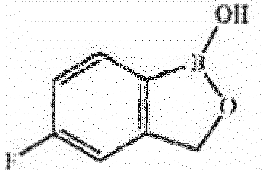 or
wherein the benzoxaborole compound is Compound B having the structure: 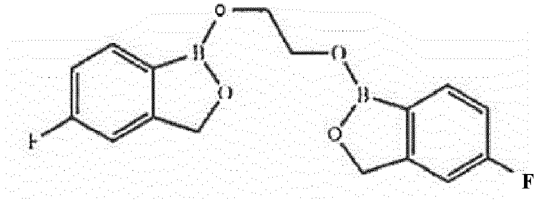 or
wherein the benzoxaborole compound is Compound C having the structure:

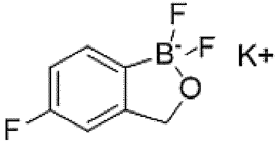

10. The method of claim 8, wherein administering the benzoxaborole treatment to the one or more surfaces of the plurality of chambers during preformation, formation, or postformation of the plurality of chambers further comprises embedding the benzoxaborole compound into the food packaging material, impregnating the food packaging material with the benzoxaborole compound, or coating the food packaging material with the benzoxaborole compound.

11. The method of claim 8, wherein the one or more surfaces of the plurality of chambers further comprise a liquid-absorbing material.

12. The method of *claim* 11, wherein the liquid-absorbing material provides for quick-release or slow-release of the benzoxaborole treatment over a time period.

13. The method of claim 8, wherein the plurality of chambers are a plurality of clamshells.

14. The method of claim 13, wherein the plurality of clamshells comprise polyethylene terephthalate.

15. The method of claim 8, wherein drying the one or more surfaces of the plurality of chambers occurs instantaneously.

## Patentansprüche

1. Verfahren zum Behandeln eines Lebensmittelprodukts mit einem antimikrobiellen Mittel, wobei das Verfahren umfasst:
Anwenden einer Benzoxaborol-Behandlung auf eine oder mehrere Oberflächen eines Lebensmittelverpackungsmaterials, wobei die Benzoxaborol-Behandlung eine oder mehrere Benzoxaborol-Verbindungen umfasst,
Trocknen der einen oder mehreren Oberflächen des Lebensmittelverpackungsmaterials,
Platzieren eines Lebensmittelprodukts innerhalb des Lebensmittelverpackungsmaterials und
Verdampfen der Benzoxaborol-Verbindung von der einen oder den mehreren Oberflächen des Lebensmittelverpackungsmaterials, um das darin befindliche Lebensmittelprodukt zu behandeln; wobei die Benzoxazol-Behandlung auf das Lebensmittelverpackungsmaterial angewandt wird, bevor das Lebensmittelprodukt innerhalb des Lebensmittelverpackungsmaterials platziert wird;
wobei die Benzoxaborol-Behandlung in flüssiger Form vorliegt.

2. Verfahren nach Anspruch 1, wobei das Lebensmittelprodukt ausgewählt ist aus der Gruppe bestehend aus einer Erdbeere, einer Himbeere, einer Brombeere und einer Blaubeere.

3. Verfahren nach Anspruch 1, wobei die Benzoxaborol-Verbindung Folgendes ist:

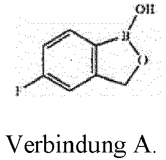

4. Verfahren nach Anspruch 1, wobei die Benzoxaborol-Verbindung Verbindung B mit folgender Struktur: 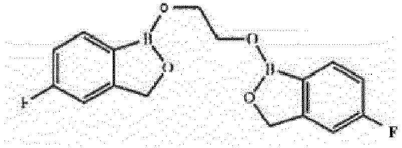 oder
wobei die Benzoxaborol-Verbindung Verbindung C mit folgender Struktur ist:

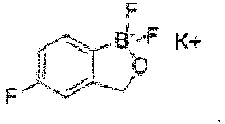

5. Verfahren nach Anspruch 1, wobei das Anwenden der Benzoxaborol-Behandlung auf das Lebensmittelverpackungsmaterial ferner Einbetten der Benzoxaborol-Verbindung in das Lebensmittelverpackungsmaterial, Imprägnieren des Lebensmittelverpackungsmaterials mit der Benzoxaborol-Verbindung oder Beschichten des Lebensmittelverpackungsmaterials mit der Benzoxaborol-Verbindung umfasst.

6. Verfahren nach Anspruch 1, wobei das Lebensmittelverpackungsmaterial eine Kammer ist.

7. Verfahren nach Anspruch 6, wobei die Kammer eine Klappschale ist, die geeigneterweise Polyethylenterephthalat umfasst.

8. Verfahren in großem Maßstab zum Behandeln einer Vielzahl von Kammern mit einem antimikrobiellen Mittel, wobei das Verfahren umfasst:
Platzieren einer Vielzahl von Kammern in einer zu behandelnden Position, wobei jede der Kammern eine oder mehrere Oberflächen umfasst,
Anwenden der Benzoxaborol-Behandlung auf eine oder mehrere Oberflächen der Vielzahl von Kammern vor der Bildung, während der Bildung oder nach der Bildung der Vielzahl von Kammern, wobei die Benzoxaborol-Behandlung eine oder mehrere Benzoxaborol-Verbindungen umfasst,
Trocknen der einen oder mehreren Oberflächen der Vielzahl von Kammern und
Aufbringen der Benzoxaborol-Verbindung auf die eine oder mehreren Oberflächen der Vielzahl von Kammern;
wobei die Benzoxaborol-Behandlung in flüssiger Form vorliegt.

9. Verfahren nach Anspruch 8, wobei die Benzoxaborol-Verbindung Verbindung A mit folgender Struktur ist: 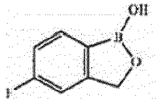 oder
wobei die Benzoxaborol-Verbindung Verbindung B mit folgender Struktur ist: 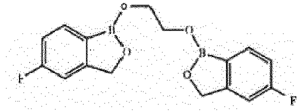 oder
wobei die Benzoxaborol-Verbindung Verbindung C mit folgender Struktur ist:

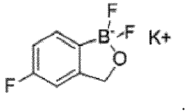

10. Verfahren nach Anspruch 8, wobei das Anwenden der Benzoxaborol-Behandlung auf die eine oder mehreren Oberflächen der Vielzahl von Kammern vor der Bildung, während der Bildung oder nach der Bildung der Vielzahl von Kammern ferner Einbetten der Benzoxaborol-Verbindung in das Lebensmittelverpackungsmaterial, Imprägnieren des Lebensmittelverpackungsmaterials mit der Benzoxaborol-Verbindung oder Beschichten des Lebensmittelverpackungsmaterials mit der Benzoxaborol-Verbindung umfasst.

11. Verfahren nach Anspruch 8, wobei die eine oder mehreren Oberflächen der Vielzahl von Kammern ferner ein flüssigkeitsabsorbierendes Material umfassen.

12. Verfahren nach *Anspruch* 11, wobei das flüssigkeitsabsorbierende Material für eine schnelle Freisetzung oder langsame Freisetzung der Benzoxaborol-Behandlung über einen Zeitraum sorgt.

13. Verfahren nach Anspruch 8, wobei die Vielzahl von Kammern eine Vielzahl von Klappschalen ist.

14. Verfahren nach Anspruch 13, wobei die Vielzahl von Klappschalen Polyethylenterephthalat umfasst.

15. Verfahren nach Anspruch 8, wobei das Trocknen der einen oder mehreren Oberflächen der Vielzahl von Kammern sofort erfolgt.

## Revendications

1. Procédé de traitement d'un produit alimentaire avec un agent antimicrobien, le procédé comprenant :
l'administration d'un traitement au benzoxaborole à une ou plusieurs surfaces d'un matériau d'emballage alimentaire, dans lequel le traitement au benzoxaborole comprend un ou plusieurs composés de benzoxaborole,
le séchage de la ou des surfaces du matériau d'emballage alimentaire, le placement d'un produit alimentaire à l'intérieur du matériau d'emballage alimentaire et la vaporisation du composé de benzoxaborole à partir de la ou des surfaces du matériau d'emballage alimentaire pour traiter le produit alimentaire qui s'y trouve ; dans lequel le traitement au benzoxaborole est administré au matériau d'emballage alimentaire avant de placer le produit alimentaire à l'intérieur du matériau d'emballage alimentaire ;
dans lequel le traitement au benzoxaborole est sous forme liquide.

2. Procédé selon la revendication 1, dans lequel le produit alimentaire est choisi dans le groupe constitué d'une fraise, d'une framboise, d'une mûre et d'une myrtille.

3. Procédé selon la revendication 1, dans lequel le composé benzoxaborole est un 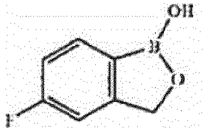 composé A.

4. Procédé selon la revendication 1, dans lequel le composé benzoxaborole est un composé B ayant la structure : 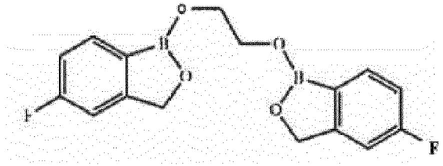 dans lequel le composé benzoxaborole est un composé C ayant la structure :

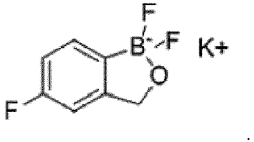

5. Procédé selon la revendication 1, dans lequel l'administration du traitement au benzoxaborole au matériau d'emballage alimentaire comprend en outre l'incorporation du composé de benzoxaborole dans le matériau d'emballage alimentaire, l'imprégnation du matériau d'emballage alimentaire avec le composé de benzoxaborole, ou l'enrobage du matériau d'emballage alimentaire avec le composé de benzoxaborole.

6. Procédé selon la revendication 1, dans lequel le matériau d'emballage alimentaire est une chambre.

7. Procédé selon la revendication 6, dans lequel la chambre est une coquille comprenant de manière appropriée du polytéréphtalate d'éthylène.

8. Procédé à grande échelle de traitement d'une pluralité de chambres avec un agent antimicrobien, le procédé comprenant :
le placement d'une pluralité de chambres dans une position à traiter dans laquelle chacune des chambres comprend une ou plusieurs surfaces,
l'administration du traitement au benzoxaborole à une ou plusieurs surfaces de la pluralité de chambres pendant la préformation, la formation ou la postformation de la pluralité de chambres, dans lequel le traitement au benzoxaborole comprend un ou plusieurs composés de benzoxaborole,
le séchage de la ou des surfaces de la pluralité de chambres et la fixation du composé de benzoxaborole sur la ou les surfaces de la pluralité de chambres ;
dans lequel le traitement au benzoxaborole est sous forme liquide.

9. Procédé selon la revendication 8, dans lequel le composé de benzoxaborole est un composé A ayant la structure : 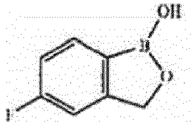
dans lequel le composé de benzoxaborole est un composé B ayant la structure : 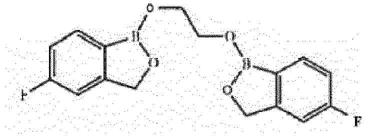
dans lequel le composé benzoxaborole est un composé C ayant la structure :

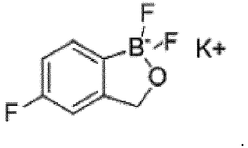

10. Procédé selon la revendication 8, dans lequel l'administration du traitement au benzoxaborole à la ou aux surfaces de la pluralité de chambres pendant la préformation, la formation ou la postformation de la pluralité de chambres comprend en outre l'incorporation du composé de benzoxaborole dans le matériau d'emballage alimentaire, l'imprégnation du matériau d'emballage alimentaire avec le composé de benzoxaborole, ou l'enrobage du matériau d'emballage alimentaire avec le composé de benzoxaborole.

11. Procédé selon la revendication 8, dans lequel la ou les surfaces de la pluralité de chambres comprennent en outre un matériau absorbant les liquides.

12. Procédé selon la *revendication* 11, dans lequel le matériau absorbant les liquides permet une libération rapide ou une libération lente du traitement au benzoxaborole sur une période de temps.

13. Procédé selon la revendication 8, dans lequel la pluralité de chambres est une pluralité de coquilles.

14. Procédé selon la revendication 13, dans lequel la pluralité de coquilles comprend du polytéréphtalate d'éthylène.

15. Procédé selon la revendication 8, dans lequel le séchage de la ou des surfaces de la pluralité de chambres se produit instantanément.
